# EUROPÄISCHE PATENTSCHRIFT

(11) **EP 2 333 026 B1**
(45) Veröffentlichungstag und Bekanntmachung des Hinweises auf die Patenterteilung: **16.07.2014**
(21) Anmeldenummer: 10187909.6
(22) Anmeldetag: 18.10.2010
(51) Int. Cl.: C09K 8/58, C09K 8/592, E21B 33/138, E21B 43/16, E21B 43/32

(54) **Verfahren zur Förderung von Erdöl**
Method for producing crude oil
Procédé de production de pétrole

(30) Priorität: 21.10.2009 EP 09173631
(43) Veröffentlichungstag der Anmeldung: 15.06.2011
(73) Patentinhaber: Wintershall Holding GmbH, 34119 Kassel (DE); Institute of Petroleum Chemistry of the Siberian Branch of the Russian Academy, Tomsk 634021 (RU)
(72) Erfinder: Stehle, Vladimir, 34123, Kassel (DE); Siemer, Konrad, 34128, Kassel (DE); Riha, Volker, 48529, Nordhorn (DE); Kuznetsov, Dmitry, 76185, Karlsruhe (DE); Altunina, Liubov, 634021, Tomsk (RU); Kuvshinov, Vladimir A., 634021, Tomsk (RU)
(74) Vertreter: Poganiuch, Peter

(56) Entgegenhaltungen:
- WO-A1-2007/135617
- US-A1- 2008 280 790
- DATABASE WPI Week 199220 Thomson Scientific, London, GB; AN 1992-164734 XP002572559, & SU 1 654 554 A1 (AS SIBE OIL CHEM INST) 7. Juni 1991 (1991-06-07)

## Beschreibung

Die vorliegende Erfindung betrifft ein Verfahren zur Förderung von Erdöl aus Erdöllagerstätten mit großen Temperaturgradienten, bei dem man zur Erhöhung der Erdölausbeute hoch permeable Bereiche der Erdölformation durch Injizieren von Formulierungen, welche nach dem Einpressen in die Lagerstätte unter dem Einfluss der Lagerstättentemperatur hochviskose Gele bilden, blockiert. Es werden mehrere Portionen der Formulierung eingesetzt, welche jeweils bei unterschiedlichen Temperaturen und/oder nach unterschiedlichen Zeiten Gele bilden können und eine sehr vollständige Blockierung hoch permeabler Bereiche der Formation bewirken.

In natürlichen Erdölvorkommen liegt Erdöl in Hohlräumen poröser Speichergesteine vor, welche zur Erdoberfläche hin von undurchlässigen Deckschichten abgeschlossen sind. Neben Erdöl, inklusive Anteilen von Erdgas enthält eine Lagerstätte weiterhin mehr oder weniger stark salzhaltiges Wasser. Bei den Hohlräumen kann es sich um sehr feine Hohlräume, Kapillaren, Poren oder dergleichen handeln, beispielsweise solche mit einem Durchmesser von nur ca. 1 µm; die Formation kann daneben aber auch Bereiche mit Poren größeren Durchmessers und/oder natürliche Brüche aufweisen.

Nach dem Niederbringen der Bohrung in die ölführenden Schichten fließt das Öl zunächst aufgrund des natürlichen Lagerstättendruckes zu den Förderbohrungen und gelangt eruptiv an die Erdoberfläche. Diese Phase der Erdölförderung wird vom Fachmann Primärförderung genannt. Bei schlechten Lagerstättenbedingungen, wie beispielsweise einer hohen Ölviskosität, schnell abfallendem Lagerstättendruck oder großen Fließwiderständen in den ölführenden Schichten, kommt die Eruptivförderung schnell zum Erliegen. Mit der Primärförderung können im Durchschnitt nur 2 bis 10 % des ursprünglich in der Lagerstätte vorhandenen Öles gefördert werden. Bei höher viskosen Erdölen ist eine eruptive Produktion in der Regel überhaupt nicht möglich.

Um die Ausbeute zu steigern, werden daher die so genannten sekundären Förderverfahren eingesetzt.

Das gebräuchlichste Verfahren der sekundären Erdölförderung ist das Wasserfluten. Dabei wird durch so genannte Injektionsbohrungen Wasser in die ölführenden Schichten eingepresst. Hierdurch wird der Lagerstättendruck künstlich erhöht und das Öl von den Injektionsbohrungen aus zu den Förderbohrungen gedrückt. Durch Wasserfluten kann der Ausbeutungsgrad unter bestimmten Bedingungen wesentlich gesteigert werden.

Beim Wasserfluten soll im Idealfalle eine von der Injektionsbohrung ausgehende Wasserfront das Öl gleichmäßig über die gesamte Erdölformation zur Produktionsbohrung drücken. In der Praxis weist eine Erdölformation aber Bereiche mit unterschiedlich hohem Fließwiderstand auf. Neben feinporösen ölgesättigten Speichergesteinen mit einem hohen Fließwiderstand für Wasser existieren auch Bereichen mit niedrigem Fließwiderstand für Wasser, wie beispielsweise natürliche oder künstliche Brüche oder sehr permeable Bereiche im Speichergestein. Bei derartigen permeablen Bereichen kann es sich auch um bereits entölte Bereiche handeln. Beim Wasserfluten fließt das eingepresste Flutwasser naturgemäß hauptsächlich durch Fließwege mit niedrigem Fließwiderstand von der Injektionsbohrung zur Produktionsbohrung. Dies hat zur Folge, dass die feinporösen ölgesättigten Lagerstättenbereiche mit hohem Fließwiderstand nicht mehr geflutet werden, und dass über die Produktionsbohrung zunehmend mehr Wasser und weniger Erdöl gefördert wird. Der Fachmann spricht in diesem Zusammenhang von einer "Verwässerung der Produktion". Die genannten Effekte sind bei schweren bzw. viskosen Erdöle besonders ausgeprägt. Je höher die Erdölviskosität, desto wahrscheinlicher ist die schnelle Verwässerung der Produktion.

Zur Förderung von Erdöl aus Lagerstätten mit hoher Erdölviskosität kann das Erdöl durch Einpressen von Heißdampf in die Lagerstätte erwärmt und so die Ölviskosität verringert werden. Wie beim Wasserfluten können aber auch Heißdampf und Dampfkondensat unerwünscht schnell durch hoch permeable Zonen von den Injektionsbohrungen zu den Produktionsbohrungen durchschlagen, und damit wird die Effizienz der tertiären Förderung reduziert.

Im Stand der Technik sind daher Maßnahmen bekannt, derartige hoch permeable Zonen zwischen Injektionsbohrungen und Produktionsbohrungen mittels geeigneter Maßnahmen zu schließen. Hierdurch werden hoch permeable Zonen mit geringem Fließwiderstand blockiert und das Flutwasser bzw. der Flutdampf durchströmen wieder die ölgesättigten, niedrig permeablen Schichten. Derartige Maßnahmen sind auch als so genannte "Conformance Control" bekannt. Einen Überblick über Maßnahmen zur "Conformance Control" geben Borling et al. "Pushing out the oil with Conformance Control" in Oilfield Review (1994), Seiten 44 ff..

Zur "Conformance Control" können vergleichsweise niedrig viskose Formulierungen bestimmter chemischer Stoffe eingesetzt, die sich leicht in die Formation einpressen lassen, und deren Viskosität erst nach dem Einpressen in die Formation unter den in der Formation herrschenden Bedingungen deutlich ansteigt. Derartige Formulierungen enthalten zur Viskositätssteigerung geeignete anorganische oder organische bzw. polymere Komponenten. Die Viskositätssteigerung der eingepressten Formulierung kann einerseits einfach zeitverzögert auftreten. Es sind aber auch Formulierungen bekannt, bei denen die Viskositätssteigerung im Wesentlichen durch den Temperaturanstieg ausgelöst wird, wenn sich die eingepresste Formulierung in der Lagerstätte allmählich auf die Lagerstättentemperatur erwärmt. Formulierungen, deren Viskosität erst unter Formationsbedingungen ansteigt, sind beispielsweise als "Thermogele" oder "delayed gelling system" bekannt.

SU 1 654 554 A1 offenbart Mischungen aus Aluminiumchlorid oder Aluminiumnitrat, Harnstoff und Wasser, welche in die Erdölformation injiziert werden. Bei den erhöhten Temperaturen in der Formation hydrolysiert der Harnstoff zu Kohlendioxid und Ammoniak. Durch die Freisetzung der Base Ammoniak wird der pH-Wert des Wassers deutlich erhöht und es fällt ein hochviskoses Aluminiumhydroxidgel aus, welches die hoch permeablen Zonen verstopft.

US 4,889,563 offenbart die Verwendung von wässrigen Lösungen eines Aluminiumhydroxidchlorids in Kombination mit Harnstoff oder Hexamethylentetramin (Urotropin) zum Blockieren unterirdischer Erdölformationen. Auch hier führt die Hydrolyse von Harnstoff oder Hexamethylentetramin in der Formation zu einer Erhöhung des pH-Wertes und dem Ausfällen von Aluminiumhydroxid.

RU 2 066 743 C1 offenbart Mischungen aus Aluminiumchlorid oder Aluminiumnitrat, Harnstoff, Urotropin und Wasser, welche in die Erdölformation injiziert werden und wie bereits geschildert wirken. Die Mischungen haben den Vorteil, dass auch bereits bei Temperaturen unterhalb von 60°C wirksam sind.

WO 2007/135617 offenbart ein Verfahren zum Blockieren unterirdischer Formationen, bei dem man eine Formulierung einsetzt, welche zeitverzögert geliert. Die Formulierung umfasst kolloidale Siliciumdioxid-Partikel mit einem Durchmesser von 4 bis 300 nm. Zum Gelieren enthält die Formation einen OH-Donor, welcher bei erhöhten Temperaturen OH-Gruppen freisetzt und dadurch die Formulierung zum Gelieren bringt. Als OH-Donor können beispielsweise Harnstoff, substituierte Harnstoffe oder Hexamethylentetramin eingesetzt werden.

US 2008/0280790 A1 offenbart ein Verfahren zur Behandlung von unterirdischen Formationen mit einer gelbildenden Formulierung, die ein unterschiedliches Viskositätsverhalten mit der Temperatur hat. Das Gel wird bei einer ersten Temperatur < 40 °C gebildet und das "shear-sensitive-persistent"-Verhalten wird unter einer anderen Temperatur erreicht.

US 7,273,101 B2 offenbart eine Formulierung mit verzögerter Gelierung, welche gelöste Metallsalze, bevorzugt Aluminiumsalze, anorganische Partikel, wie beispielsweise Siliciumdioxid-Partikel sowie einen OH-Donor, wie beispielsweise Harnstoff umfasst. Die Formulierung wird in Erdölformationen eingepumpt und geliert erst mit einer gewissen Zeitverzögerung in der Formation.

US 4,844,168 offenbart ein Verfahren zum Blockieren von Abschnitten von Hochtemperatur-Erdölformationen, bei dem man Polyacrylamid und ein mehrwertiges Metallion, bspw. Fe(III), Al(III), Cr(III) oder Zr (IV) in eine Erdölformation mit einer Reservoirtemperatur von mindestens 60°C einpresst. Unter den Bedingungen in der Formation hydrolysieren die Amidgruppen -CONH₂ teilweise zu -COOH-Gruppen, wobei die Metallionen die gebildeten - COOH-Gruppen vernetzen, so dass mit einer gewissen Zeitverzögerung ein Gel gebildet wird.

US 6,838,417 B2 offenbart ein Verfahren zum Blockieren unterirdischer Erdölformationen, bei dem man eine wässrige Formulierung einsetzt, welche mindestens ein wasserlösliches Polymer, eine gelierende organische Komponente, welche vernetzend wirkt sowie mindestens ein wasserlösliches Formiat umfasst. Bei der vernetzend wirkenden organischen Komponente handelt es sich z.B. um polyfunktionelle aliphatische Amine, Arylalkylamine, Heteroarylalkylamine oder Polyalkylenimine.

US 2008/0035344 A1 offenbart eine Mischung zum Blockieren unterirdischer Formationen mit verzögerter Gelierung, welche mindestens ein säurelösliches, vernetzbares Polymer, beispielsweise teilweise hydrolysiertes Polyacrylamid, ein teilweise neutralisiertes Aluminiumsalz, beispielsweise ein Aluminiumhydroxidchlorid sowie einen Aktivator umfasst, welcher unter Formationsbedingungen Basen freisetzen kann, wie beispielsweise Harnstoff, substituierte Harnstoffe oder Hexamethylentetramin. Die Mischung kann bevorzugt bei einer Temperatur von 0 bis 40°C angesetzt werden und geliert bei Temperaturen oberhalb 50°C je nach Einsatzbedingungen innerhalb von 2 h bis 10 Tagen.

RU 2 339 803 C2 offenbart ein Verfahren zum Blockieren derartiger hoch permeabler Zonen, bei dem zunächst einmal das Volumen zur zu blockierenden, hoch permeablen Zonen bestimmt. Anschließend wird in einem ersten Verfahrensschritt eine wässrige Formulierung aus Carboxymethylcellulose und Chromacetat als Vernetzer in 15 Vol. %, bezogen auf das Gesamtvolumen der zu blockierenden Zone der Erdölformation injiziert. In einem zweiten Schritt wird eine wässrige Formulierung von Polyacrylamid und einem Vernetzer injiziert.

L. K. Altunina und V. A. Kuvshinov in Oil & Gas Science and Technology - Rev. IFP, Vol. 63 (2008) (1), Seiten 37 bis 48 beschreiben verschiedene Thermogele und deren Verwendung zur Ölförderung, darunter Thermogele auf Basis von Harnstoff und Aluminiumsalzen sowie Thermogele auf Basis von Celluloseether.

Erdölformationen haben häufig keine homogene Temperaturverteilung, sondern weisen mehr oder weniger starke Temperaturgradienten auf. Derartige Temperaturgradienten können natürlichen Ursprungs sein oder auch durch Maßnahmen der sekundären und/oder tertiären Erdölförderung künstlich hervorgerufen werden. So weist der zum Dampffluten eingesetzte Dampf üblicherweise eine Temperatur von über 300°C auf. Dem entsprechend kann sich die Erdölformation am Ort der Injektionsbohrung auf über 300°C aufheizen. Naturgemäß nimmt die Temperatur mit zunehmender Entfernung von der Injektionsbohrung ab, und somit kann sich von den Injektionsbohrungen zu den Produktionsbohrungen ein deutlicher Temperaturgradient aufbauen. Beispielsweise kann die Temperatur beim Dampffluten an der Injektionsbohrung ca. 300°C betragen, während an der Produktionsbohrung nur eine Temperatur von ca. 50°C herrscht. Umgekehrt kann durch ständiges Einpressen von kaltem Flutwasser die Temperatur der Erdölformation an der Injektionsbohrung auch deutlich absinken und mit zunehmender Entfernung von der Injektionsbohrung zunehmen. Beispielsweise kann in einer Lagerstätte mit einer Lagerstättentemperatur von ca. 120°C die Temperatur am Wasserinjektor bei langer Injektionsdauer durchaus auf 40 bis 60°C abkühlen.

Bei Erdölformationen mit stark inhomogener Temperaturverteilung führt der Einsatz der oben genannten Formulierungen zur Blockierung hoch permeabler Zonen häufig nur zu einer unzureichenden Blockierung der Fließwege. Die Verwässerung der Produktion wird zwar verringert, aber nicht so weit wie wirtschaftlich wünschenswert.

Aufgabe der Erfindung war es daher, es Verfahren zur Förderung von Erdöl aus Erdölformationen mit einer stark inhomogenen Temperaturverteilung bereitzustellen, bei dem die Verwässerung der Produktion vermieden wird.

Dem entsprechend wurde ein Verfahren zur Förderung von Erdöl aus unterirdischen Erdöllagerstätten gefunden, in welche mindestens eine Produktionsbohrung und mindestens eine Injektionsbohrung abgeteuft sind, und welches mindestens die folgenden Verfahrensschritte umfasst:
(1) Einpressen von wässrigen, gelbildenden Formulierungen (F) durch eine Injektionsbohrung in die Erdöllagerstätte, wobei die Formulierungen (F) Wasser sowie eine oder mehrere chemische Komponenten enthalten, welche nach dem Einpressen in die Lagerstätte unter dem Einfluss der Lagerstättentemperatur Gele bilden, gefolgt von
(2) Fördern von Öl durch mindestens eine Produktionsbohrung,
   wobei
   - die Lagerstätte im Bereich zwischen der Injektionsbohrung und der Produktionsbohrung eine Temperaturverteilung mit einer minimalen Temperatur Tₘᵢₙ ≥ 20°C und einer maximalen Temperatur Tₘₐₓ ≤ 320°C aufweist, wobei die Temperaturdifferenz Tₘₐₓ- Tₘᵢₙ mindestens 20°C beträgt,
   - man in einem Verfahrensschritt (1) vorgelagerten Schritt die Temperaturverteilung im Bereich zwischen der Injektionsbohrung und der Produktionsbohrung analysiert, und
   - man in Verfahrensschritt (1) mindestens zwei verschiedene Portionen wässriger, gelbildender Formulierungen (F) nacheinander in die Formation injiziert,
   wobei es sich bei den Formulierungen (F) um saure, wässrige Formulierungen mit einem pH-Wert ≤ 5 handelt, welche mindestens
   - Wasser,
   - eine darin gelöste Aluminiumverbindung, die beim Versetzen mit Basen Gele bilden kann, ausgewählt aus der Gruppe von Aluminium(III)salzen und teilweise hydrolysierten Aluminiumsalzen, sowie
   - einen wasserlöslichen Aktivator umfassen, welcher bei einer Temperatur T ≥ T_{Gel} eine Erhöhung des pH-Wertes der wässerigen Lösung bewirkt, ausgewählt aus der Gruppe von Harnstoff und/oder Hexamethylentetramin,
   wobei jede der Portionen zur Gelbildung bei einer Temperatur oder einem Temperaturbereich innerhalb der Spanne von Tₘᵢₙ bis Tₘₐₓ befähigt ist, und wobei sich die Formulierungen im Hinblick auf die Art der enthaltenen chemischen Komponenten und/oder deren jeweiliger Konzentration unterscheiden, mit der Maßgabe, dass die chemischen Komponenten der Formulierungen und/oder deren Konzentration so gewählt werden, dass sich die Gelbildungstemperatur (T_{Gel}) und/oder die Gelbildungszeit (t_{Gel}) der zweiten und optional jeder weiteren injizierten Portion von der der zuvor injizierten Portion unterscheidet.

Das erfindungsgemäße Verfahren hat den Vorteil, dass man in Lagerstätten mit großen Temperaturgradienten Zonen unterschiedlicher Temperatur gezielt mittels geeigneter Gele blockieren kann. Hierdurch wird eine vollständigere Blockierung hoch permeabler Zonen erreicht und die Verwässerung der Produktion deutlich verringert.

Zu der Erfindung ist im Einzelnen das Folgende auszuführen:

Bei dem erfindungsgemäßen Verfahren zur Förderung von Erdöl handelt es sich um ein Verfahren zur sekundären oder tertiären Erdölförderung, d.h. es wird angewandt nachdem die primäre Erdölförderung aufgrund des Eigendrucks der Lagerstätte zum Erliegen gekommen ist und man den Druck in der Lagerstätte durch Einpressen von Wasser und/oder Dampf aufrecht erhalten muss.

### Lagerstätten

Bei den Lagerstätten kann es sich um Lagerstätten für alle Sorten von Öl handeln, beispielsweise um solche für leichtes oder für schweres Öl. In einer Ausführungsform der Erfindung handelt es sich bei den Lagerstätten um Schweröllagerstätten, d.h. Lagerstätten, welche Erdöl mit einem API-Grad von weniger als 22,3° API enthalten. Aus derartigen Lagerstätten wird Erdöl in der Regel durch Einpressen von Dampf gefördert.

Unabhängig davon, ob es sich um eine Schweröllagerstätte handelt oder nicht, kann das erfindungsgemäße Verfahren besonders vorteilhaft im Anschluss an ein erstes Dampffluten der Lagerstätte angewandt werden.

Zur Ausführung des Verfahrens werden in die Erdöllagerstätten mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Hier bei kann es sich um Bohrungen handeln, welche bereits in einem früheren Stadium der Erdölförderung genutzt wurden, beispielsweise im Zuge eines vorangehenden von Wasserflutens bzw. Dampfflutens, die Bohrungen können aber auch eigens zur Ausführung des erfindungsgemäßen Verfahrens in die Lagerstätte abgeteuft werden.

Erfindungsgemäß handelt es sich um eine Lagerstätte, welche im Bereich zwischen der oder den Injektionsbohrung(en) und der oder den Produktionsbohrung(en) eine Temperaturverteilung mit einer minimalen Temperatur Tₘᵢₙ ≥ 20°C, bevorzugt ≥ 30°C, besonders bevorzugt ≥ 40°C und beispielsweise ≥ 50°C und einer maximalen Temperatur Tₘₐₓ ≤ 320°C, in der Regel ≤ 300°C, bevorzugt ≤ 280°C, besonders bevorzugt ≤ 250°C, ganz besonders bevorzugt ≤ 220°C und beispielsweise 150°C aufweist, wobei die Temperaturdifferenz Tₘₐₓ- Tₘᵢₙ mindestens 20°C beträgt.

Der Begriff "Bereich zwischen der Injektions- und Produktionsbohrung" bezieht sich dabei auf diejenigen Volumenelemente der Lagerstätte, durch die Strömungswege von den Injektionsbohrungen zu den Produktionsbohrungen führen, wobei die Strömungswege naturgemäß nicht geradlinig zwischen Injektions- und Produktionsbohrung verlaufen müssen. Dem Fachmann sind Methoden bekannt, wie man derartige durchströmte Volumenelemente ermitteln kann.

Die Lagerstätte kann selbstverständlich auch außerhalb des Bereichs zwischen den Produktionsbohrungen und den Injektionsbohrungen eine inhomogene Temperaturverteilung aufweisen.

Die Bezugspunkte zur Bestimmung des "Bereichs zwischen der Injektions- und Produktionsbohrung" sind naturgemäß nicht Produktionsbohrung und die Injektionsbohrung in ihrer gesamten Länge, sondern bei der Injektionsbohrung die Stelle der Bohrung, an der die Formulierung (F) tatsächlich aus der Induktionsbohrung in die Formation eintritt, und bei der Produktionsbohrung diejenige Stelle, an der Rohöl tatsächlich aus der Formation in die Produktionsbohrung eintritt bzw. zukünftig eintreten soll.

Die beschriebenen Temperaturdifferenzen können natürlichen Ursprungs sein oder auch durch Maßnahmen der sekundären und/oder tertiären Erdölförderung wie Wasserfluten oder Dampffluten verursacht werden. Durch Dampffluten können besonders große Temperaturdifferenzen hervorgerufen werden. Dampf wird üblicherweise mit Temperaturen von bis zu 320°C in die Erdölformation eingepresst. Je nach Dauer der Dampfinjektion kann eine Erdölformation nach dem Dampffluten größere Bereiche mit einer Temperatur von über 250°C aufweisen. Naturgemäß nimmt die Temperatur mit zunehmender Entfernung vom Injektor bis zur "natürlichen" Lagerstättentemperatur ab. Weiterhin nimmt die Lagerstättentemperatur auch nach dem Abschalten eines Dampfinjektors nach und nach ab.

Hinsichtlich von Tₘᵢₙ und Tₘₐₓ können zwei Arten von Lagerstätten unterschieden werden, nämlich Lagerstätten, aus welchen mithilfe von Wasserfluten gefördert wurde und Lagerstätten, aus denen mithilfe Dampffluten gefördert wurde. Lagerstätten, aus welchen mithilfe von Wasserfluten gefördert wurde, weisen in der Regel eine Temperaturverteilung im Bereich von 20°C bis 150°C, bevorzugt 20°C bis 120°C, besonders bevorzugt 30 bis 110°C und beispielsweise 40 bis 100°C auf (jeweils Tₘᵢₙ bis Tₘₐₓ). Lagerstätten, aus welchen mithilfe von Dampffluten gefördert wurde, weisen in der Regel eine Temperaturverteilung im Bereich von 20°C bis 300°C, bevorzugt 30°C bis 280°C, besonders bevorzugt 40 bis 250°C und beispielsweise 50°C bis 220°C auf (jeweils Tₘᵢₙ bis Tₘₐₓ).

Die Vorteile des erfindungsgemäßen Verfahrens kommen insbesondere bei großen Temperaturgradienten zwischen der Injektions- und der Produktionsbohrung zum Tragen. Je größer der Temperaturgradient, umso besser kann mittels des erfindungsgemäßen Verfahrens gearbeitet werden. Die Vorteile des erfindungsgemäßen Verfahrens kommen insbesondere zur Geltung, wenn die Temperaturdifferenz Tₘₐₓ - Tₘᵢₙ mindestens 30°C beträgt, insbesonders mindestens 40°C, bevorzugt mindestens 60°C, besonders bevorzugt mindestens 80°C, ganz besonders bevorzugt mindestens 120°C und beispielsweise mindestens 150°C.

Das erfindungsgemäße Verfahren kann je nach Beschaffenheit der Lagerstätte bevorzugt im Anschluss an ein vorangehendes Wasser- und/oder Dampffluten, bevorzugt Dampffluten der Erdöllagerstätte durchgeführt werden, ohne dass dies zwingend erforderlich sein muss. Bei derartigen Flutvorgängen wird ein Flutmedium, insbesondere Wasser oder Dampf durch mindestens eine Injektionsbohrung in Erdöllagerstätte eingepresst, und der Lagerstätte durch mindestens eine Produktionsbohrung Rohöl entnommen. Mit dem Begriff "Rohöl" ist in diesem Zusammenhang selbstverständlich nicht phasenreines Öl gemeint, sondern gemeint sind die üblichen, Öl und Formationswasser umfassenden Emulsionen, welche aus Erdöllagerstätten gefördert werden. Das erfindungsgemäße Verfahren kann angewandt werden, sobald die Produktion zu stark verwässert wird. Hoch permeable Zonen müssen aber nicht zwingend durch Wasser- oder Dampffluten geschaffen werden, sondern können natürlicherweise in einer Formation vorhanden sein.

### Verfahren

Erfindungsgemäß umfasst das das Verfahren mindestens zwei Verfahrensschritte (1) und (2), welche nacheinander ausgeführt werden. In einem ersten Verfahrensschritt (1) werden hoch permeable Zonen der Formation durch Einpressen von wässrigen, gelbildenden Formulierungen (F) in die Formation verschlossen. In einem zweiten Verfahrensschritt (2) erfolgt die eigentliche Erdölförderung. Die Ölförderung kann beispielsweise unter Einsatz eines geeigneten Flutmediums erfolgen.

### Verfahrensschritt (1)

Zur Vorbereitung von Verfahrensschritt (1) wird die Temperaturverteilung im Bereich zwischen der Injektionsbohrung und der Produktionsbohrung analysiert. Methoden zur Ermittlung der Temperaturverteilung einer Erdöllagerstätte sind dem Fachmann prinzipiell bekannt. Sie wird in der Regel aus Temperaturmessungen an bestimmten Stellen der Formation in Kombination mit Simulationsrechnungen vorgenommen, wobei man bei den Simulationsrechnungen u.a. in die Formation eingebrachte Wärmemengen sowie die aus der Formation abgeführte Wärmemengen berücksichtigt. Alternativ kann jeder der Bereiche auch durch seine Durchschnittstemperatur charakterisiert werden. Für den Fachmann ist klar, dass die geschilderte Analyse der Temperaturverteilung sowie gegebenenfalls das Einteilen in mehrere Teilbereiche unterschiedlicher Temperaturspannen bzw. unterschiedlicher Durchschnittstemperaturen nur eine Näherung für die tatsächlichen Verhältnisse in der Formation darstellt.

Erfindungsgemäß injiziert man in Verfahrensschritt (1) nacheinander mindestens zwei unterschiedliche Portionen einer wässrigen, gelbildenden Formulierung (F) durch eine Injektionsbohrung in die Erdölformation. Die Formulierungen (F) umfassen neben Wasser eine oder mehrere verschiedene wasserlösliche oder wasserdispergierbare chemische Komponenten, welche nach dem Einpressen der Formulierungen in die Formation unter den in der Formation herrschenden Bedingungen die Gelbildung bewirken. Die eingesetzten Portionen weisen jeweils unterschiedliche Gelbildungstemperaturen T_{Gel} und/oder Gelbildungszeiten t_{Gel} auf.

Der Begriff "gelbildend" bedeutet, dass die Mischung grundsätzlich unter bestimmten Bedingungen Gele bilden kann, dass aber die Gelbildung noch nicht unmittelbar nach dem Mischen der Komponenten der Formulierung einsetzt, sondern dass die Bildung eines Gels zeitverzögert erst beim Überschreiten der Gelbildungstemperatur T_{Gel} einsetzt. Die verwendeten Formulierungen sind also nach dem Anmischen vergleichsweise niedrig viskos, so dass sie sich problemlos in die Formation einpressen lassen und bilden erst nach dem besagten Einpressen in die Formation unter dem Einfluss der herrschenden Lagerstättentemperatur hochviskose Gele, welche hoch permeable Bereiche der Lagerstätte blockieren können.

Für den Fachmann ist klar, dass die Geschwindigkeit einer Gelbildung in der Regel sowohl von der Zeit als auch von der Temperatur abhängen kann. Der Fachmann kann die Gelbildungstemperatur durch Messung der Gelbildungsgeschwindigkeit einer bestimmten Formulierung in Abhängigkeit der Temperatur gefolgt von einer Extrapolation der Messkurve auf eine Reaktionsgeschwindigkeit von null exakt bestimmen. In einem pragmatischen Ansatz kann der Fachmann die Gelbildungstemperatur näherungsweise als das Einsetzen der Gelbildung nach einer praxisrelevanten Zeitspanne definieren. Wesentlich ist nur, dass zum Vergleich der Gelbildungstemperaturen T_{Gel} der jeweils eingesetzten Formulierungen (F) jeweils die gleiche Methode zur Bestimmung der Gelbildungstemperatur verwendet wird.

Die injizierten Portionen der Formulierung (F) können sich auch im Hinblick auf die Gelbildungszeit t_{Gel} unterscheiden. Hierunter ist die Zeitspanne vom Aufwärmen der Formulierung auf eine Temperatur ≥ T_{Gel} bis zum Ausbilden eines Gels gemeint. Es ist also möglich, zwei gelbildende Formulierungen mit gleicher Gelbildungstemperatur T_{Gel} aber unterschiedlichen Gelbildungszeiten t_{Gel} zu verwenden. Selbstverständlich können sich die einzelnen Portionen der gelbildenden Formulierung sowohl im Hinblick auf T_{Gel} und t_{Gel} unterscheiden.

Die Unterschiede der Gelbildungstemperaturen T_{Gel} und/oder t_{Gel} werden durch eine unterschiedliche Zusammensetzung der eingesetzten Portionen der Formulierungen (F) hervorgerufen. Der Begriff "unterschiedliche Zusammensetzung" soll bedeuten, dass sich die Formulierungen im Hinblick auf die Art der enthaltenen chemischen Komponenten und/oder deren jeweilige Konzentration unterschieden. Letzteres bedeutet zwangsläufig, dass sich auch das Mengenverhältnis der Komponenten zueinander unterscheiden kann. Auf die Art der gelbildenden Formulierungen kommt es hierbei nicht an, wesentlich ist nur, dass die Formulierungen die erfindungsgemäßen Funktionen erfüllen können. Zur Ausführung der Erfindung bevorzugte Formulierungen werden weiter unten geschildert.

Die eingesetzten Formulierungen werden vom Fachmann so gewählt, dass jede der eingepressten Portionen zur Gelbildung bei einer Temperatur bzw. innerhalb einer Temperaturspanne innerhalb des Bereiches von Tₘᵢₙ bis Tₘₐₓ befähigt ist. In der Regel beträgt die Gelbildungstemperatur T_{Gel} 20°C bis 150°, bevorzugt 30 bis 150°C und besonders bevorzugt 40 bis 130°C.

Erfindungsgemäß werden die Formulierungen so dabei gewählt, dass sich die Gelbildungstemperatur T_{Gel} und/oder die Gelbildungszeit t_{Gel} der zweiten und optional jeder weiteren injizierten Portion von der der zuvor injizierten Portion unterscheidet. Bevorzugt weisen alle injizierten Portionen eine unterschiedliche Gelbildungstemperatur T_{Gel} und/oder Gelbildungszeit t_{Gel} auf. Es ist aber auch möglich, dass nicht nacheinander eingepresste Portionen die gleiche Gelbildungstemperatur T_{Gel} und die gleiche Gelbildungszeit t_{Gel} aufweisen.

Eine unterschiedliche Gelbildungstemperatur T_{Gel} und/oder Gelbildungszeit t_{Gel} bewirkt, dass die mindestens zwei Formulierungen von der Injektionsstelle ausgehend unterschiedlich weit in die Formation eindringen können. Hierdurch werden hochpermeable Bereiche der Formation nicht nur punktuell an einer Stelle verschlossen, sondern sie werden auf einer größeren Strecke verschlossen. Hierdurch wird ein weit besserer Verschluss hochpermeabler Bereiche erzielt.

Die Anzahl der eingepressten Portionen gelbildender Formulierungen, deren Gelbildungstemperatur T_{Gel} und/oder Gelbildungszeit t_{Gel} sowie die jeweilige Veränderung der Gelbildungstemperatur von Portion zu Portion werden vom Fachmann je nach der Art der Formation und den Lagerstättenbedingungen, insbesondere der Temperaturverteilung gewählt.

In einer bevorzugten Ausführungsform der Erfindung werden zumindest zwei Portionen mit unterschiedlicher Gelbildungstempertur T_{Gel} eingesetzt.

Die Gelbildungstemperatur T_{Gel} der Portionen kann in einer Ausführungsform der Erfindung von Portion zu Portion verringert werden, und sie kann in einer zweiten Ausführungsform der Erfindung von Portion zu Portion erhöht werden.

In einer Ausführungsform der Erfindung ist hierbei bei der ersten injizierten Portion T_{Gel} = Tₘₐₓ wie oben definiert. Diese Ausführungsform ist besonders geeignet für Tₘₐₓ ≤ 150°C. In einer weiteren Ausführungsform ist bei der ersten injizierten Portion T_{Gel} < Tₘₐₓ.

Die Änderung der Gelbildungstemperatur T_{Gel} kann stufenweise erfolgen. Sie kann in einer Ausführungsform der Erfindung stufenweise verringert werden, und sie kann in einer weiteren Ausführungsform der Erfindung stufenweise erhöht werden.

Es ist aber auch möglich, dass die Änderung von T_{Gel} kontinuierlich erfolgt. Sie kann kontinuierlich erhöht oder bevorzugt kontinuierlich verringert werden. Zur kontinuierlichen Veränderung der Gelbildungstemperatur wird die Zusammensetzung der gelbildenden Formulierung kontinuierlich verändert. Dies kann bevorzugt direkt am Bohrlochkopf erfolgen.

Die Veränderung der Gelbildungszeit t_{Gel} kann ebenfalls kontinuierlich oder stufenweise ansteigend bzw. absteigend erfolgen. Die Veränderung der Gelbildungszeit t_{Gel} ist insbesondere dann vorteilhaft, wenn die es sich um Lagerstätten handelt, bei denen die Temperaturdifferenz Tₘₐₓ - Tₘᵢₙ nicht allzu groß ist. Unter diesen Bedingungen kann bei zwei Portion gleicher Gelbildungstemperatur T_{Gel} diejenige mit größerer Gelbildungszeit t_{Gel} deutlich weiter in die Formation einströmen als die Portion mit der kürzeren Gelbildungszeit t_{Gel}.

In einer bevorzugten Ausführungsform der Erfindung wird das Verhältnis der Volumina der einzupressenden Portionen der Formulierung (F) entsprechend den Verhältnissen in der Formation gezielt angepasst. Hierbei teilt man auf Basis der Analyse der Temperaturverteilung den Bereich zwischen der Injektionsbohrung und der Produktionsbohrung in mindestens zwei Teilbereiche ein, wobei jeder der Teilbereiche n einen bestimmten Temperaturbereich mit einer Maximaltemperatur Tₘₐₓ₍ₙ₎ und einer Minimaltemperatur Tₘᵢₙ₍ₙ₎ aufweist, wobei Tₘₐₓ₍ₙ₎ ≤ Tₘₐₓ und Tₘᵢₙ₍ₙ₎ ≥ Tₘᵢₙ, d.h. jeder der Teilbereiche liegt innerhalb des Teilbereichs Tₘₐₓ bis Tₘᵢₙ. Die Temperaturverteilung jedes Teilbereiches kann selbstverständlich auch durch eine Durchschnittstemperatur charakterisiert werden. Jeder Teilbereich weist ein bestimmtes Hohlraumvolumen auf. Das Hohlraumvolumen in jedem Teilbereich kann beispielsweise durch Messungen in Kombination mit Simulationsrechnungen näherungsweise bestimmt werden und wird anderenfalls vom Fachmann zumindest grob geschätzt. Erfindungsgemäß wird nun eine der Anzahl der Teilbereiche entsprechende Anzahl von Portionen der Formulierung (F) mit jeweils unterschiedlicher T_{Gel} injiziert, wobei man das Verhältnis der Volumina der einzupressenden Portionen entsprechend dem Verhältnis der Hohlraumvolumina der beschrieben Teilbereiche wählt.

In einer weiteren Ausführungsform der Erfindung kann die Viskosität der gelbildenden Formulierungen (F) von Portion zu Portion gezielt verändert werden. Gemeint ist hierbei die Viskosität der gelbildenden Formulierung vor dem vor dem Injizieren in die Formation, also noch vor der Gelbildung. Bevorzugt kann die Viskosität von Portion zu Portion erhöht werden. Hierdurch wird die Gefahr verringert, dass sich verschiedene injizierte Portionen in der Formation miteinander Vermischen und dadurch der Effekt des Verfahrens verschlechtert wird. Weiterhin kann das sogenannte "Fingering" dadurch verringert werden.

Das Injizieren der einzelnen Portionen der Formulierung (F) kann unmittelbar nacheinander, d.h. ohne Unterbrechung des Einpressens der Formulierungen (F) erfolgen.

Es ist aber auch möglich, das Injizieren der der einzelnen Portionen durch eine Pause zu unterbrechen, in der keine Formulierung (F) eingepresst wird. Während der Unterbrechung kann einerseits gar keine Aktion erfolgen, es kann aber auch alternativ während der gesamten Zeit der Unterbrechung oder auch nur einem Teil davon ein Flutmedium, insbesondere Wasser und/oder Dampf injiziert werden. Nach dem Einpressen der letzten Portion der Formulierung (F) kann noch mit Wasser und/oder Dampf nachgeflutet werden, beispielsweise um die eingepresste Formulierung (F) an den gewünschten Ort in der Formation zu transportieren.

Das Injizieren der Formulierungen (F) kann durch eine Injektionsbohrung erfolgen, welche eigens für das Injizieren der Formulierungen gebohrt wurde. Selbstverständlich kann es sich auch um mehrere Injektionsbohrungen handeln. Eine derartige Bohrung kann bevorzugt in einer Zone mit einer Temperatur T < Tₘₐₓ gebohrt werden, besonders bevorzugt in einer Zone nahe Tₘᵢₙ. Durch eine solche Injektionsbohrung in einer vergleichsweise kalten Zonen kann besonders vorteilhaft mit dem Einpressen der Formulierung mit der höchsten Gelbildungstemperatur begonnen und anschließend die Gelbildungstemperatur von Portion zu Portion jeweils absteigend verändert werden.

Es ist aber auch möglich, eine schon vorhandene Injektionsbohrung, welche für ein vorausgehendes Wasser- und/oder Dampffluten verwendet wurde, zum Injizieren der Portionen der Formulierungen (F) zu verwenden. Während dies für den Falle, dass sich Verfahrensschritt (1) an ein Wasserfluten anschließt, im Regelfalle keine Probleme bereitet, kann es für den Fall, dass im vorangehenden Schritt Dampf injiziert wird, besonderer Vorkehrungen bedürfen. In einem solchen Falle ist die Zone um den Dampfinjektor nämlich sehr heiß. Sofern erwünscht ist, dass die injizierten Portionen erst in weiter vom Dampfinjektor entfernten Zonen gelieren, empfiehlt es sich, Formulierungen einzusetzen, welche eine relativ hohe Verzögerungszeit bis zum Gelieren aufweisen und die Formulierungen sehr rasch durch die heiße Zone um den Dampfinjektor zu drücken. Selbstverständlich kann man die Zone um den Dampfinjektor zunächst etwas abkühlen lassen. Ein solches Abkühlen kann optional auch durch das Eindrücken von Wasser beschleunigt werden. Sofern durch einen Dampfinjektor injiziert wird, sollte die heiße Zone um den Dampfinjektor bevorzugt eine Temperatur von nicht mehr als 250°C, bevorzugt nicht mehr als 220°C aufweisen.

### Verfahrensschritt (2)

Nach Verfahrensschritt (1) wird die Ölförderung durch mindestens eine Produktionsbohrung fortgesetzt.

Bevorzugt kann die Ölförderung nach üblichen Methoden durch Einpressen eines Flutmediums durch mindestens eine Injektionsbohrung in die Erdöllagerstätte und Entnehmen von Rohöl durch mindestens eine Produktionsbohrung erfolgen. Bei dem Flutmedium kann es sich insbesondere um Kohlendioxid, Wasser und/oder Dampf, bevorzugt um Dampf handeln. Bei der mindestens einen Injektionsbohrung kann es sich um die zum Injizieren der Formulierungen (F) verwendeten Injektionsbohrungen handeln oder auch um geeignet angeordnete andere Injektionsbohrungen.

Die Ölförderung kann aber selbstverständlich auch mittels anderer, dem Fachmann bekannter Methoden fortgesetzt werden. Beispielsweise kann man Mikroorganismen einsetzen, welche in der Formation Methan oder Kohlendioxid entwickeln und auf diese Art und Weise den Druck aufrecht erhalten. Weiterhin kann man als Flutmedium auch hochviskose Lösungen von verdickenden Polymeren einsetzten. Hierbei kann es sich synthetische Polymere, wie beispielsweise Polyacrylamid oder Acrylamid umfassende Copolymere handeln. Weiterhin kann es sich auch um Biopolymere handeln, wie beispielsweise bestimmte Polysaccharide.

### Bevorzugte Formulierungen

Die wässrigen, gelbildenden Formulierungen (F) umfassen neben Wasser eine oder mehrere verschiedene wasserlösliche oder wasserdispergierbare chemische Komponenten, welche für die Gelbildung verantwortlich sind. Bevorzugt handelt es sich um mindestens zwei verschiedene Komponenten. Hierbei kann es sich sowohl um anorganische Komponenten als auch um organische Komponenten handeln sowie selbstverständlich auch Kombinationen anorganischer und organischer Komponenten.

Auf die Art der gelbildenden Formulierungen (F) kommt es hierbei im Grunde nicht an. Wesentlich ist, dass die eingesetzten Formulierungen Gele bilden können und unterschiedliche T_{Gel} und/oder t_{gel} aufweisen, so dass unterschiedliche Bereiche in der unterirdischen Formation durch das Gel verschlossen werden können.

Geeignete Formulierungen sowie Techniken zur Variation von T_{Gel} und/oder t_{gel} sind dem Fachmann prinzipiell bekannt.

Beispielsweise kann es sich um Formulierungen auf Basis wasserlöslicher Polymere handeln, wie beispielsweise von US 4,844,168, US 6,838,417 B2 oder US 2008/0035344 A1 offenbart, oder um Formulierungen im Wesentlichen auf Basis anorganischer Komponenten, wie beispielsweise von SU 1 654 554 A1, US 4,889,563, RU 2 066 743 C1, WO 2007/135617, US 7,273,101 B2 oder RU 2 339 803 C2 offenbart. Geeignete Formulierungen sind auch kommerziell erhältlich.

In der Regel beträgt die Gelbildungstemperatur T_{Gel} eingesetzten Formulierungen (F) 20°C bis 150°, bevorzugt 30 bis 150°C und besonders bevorzugt 40 bis 130°C. Sofern heißere Zonen in einer Formation blockiert werden sollen, empfiehlt es sich die Gelbildungszeit t_{Gel} der eingesetzten Gele zu erhöhen. Dies kann beispielsweise erfolgen, indem man die Formulierungen stärker verdünnt oder das Verhältnis der Komponenten zueinander verändert. Einzelheiten hierzu werden weiter unten geschildert. Durch eine längere Gelbildungszeit t_{Gel} dauert es länger, bis die eingesetzte Formulierung nach Erreichen einer heißen Zone geliert, so dass die Formulierung weiter in die heiße Zone Eindringen kann.

Neben Wasser kann die Formulierung optional noch weitere, mit Wasser mischbare organische Lösemittel umfassen. Beispiele derartiger Lösemittel umfassen Alkohole. In der Regel sollten die Formulierungen (F) aber mindestens 80 Gew. % Wasser bezüglich der Summe aller Lösemittel der Formulierung umfassen, bevorzugt mindestens 90 Gew. % und besonders bevorzugt mindestens 95 Gew. %. Ganz besonders bevorzugt sollte nur Wasser anwesend sein.

Bei den gelösten Aluminium(III}salzen handelt es sich bevorzugt um Aluminiumchlorid, Aluminiumnitrat, Aluminiumsulfat, Aluminimacetat oder Aluminiumacetylacetonat. Bei den teilweise hydrolysierten Aluminiumsalzen handelt es sich bevorzugt um Aluminiumhydroxychlorid. Selbstverständlich können auch Gemische mehrerer verschiedener Aluminiumverbindungen eingesetzt werden. Vorzugsweise ist der pH-Wert der Formulierung in der Regel ≤ 4,5.

Die Formulierungen können darüber hinaus noch weitere Komponenten umfassen, welche die Gelbildung beschleunigen oder verlangsamen können. Beispiele umfassen weitere Salze oder Naphthensäuren.

Die Konzentrationen der eingesetzten Metallverbindungen werden vom Fachmann so gewählt, dass sich ein Gel mit der gewünschten Viskosität bildet. Er wird daher den Aktivator in einer solchen Konzentration einsetzen, dass sich eine ausreichende Menge Base bilden kann, um den pH-Wert so weit abzusenken, dass tatsächlich ein Gel ausfallen kann. Weiterhin kann man über die Mengen bzw. die Mengenverhältnisse auch die Gelbildungszeit t_{Gel} bestimmt werden. Je höher die Konzentration des Aktivators, desto größer ist -bei gegebener Konzentration der Metallverbindung- die Geschwindigkeit der Gelbildung. Diesen Zusammenhang kann der Fachmann nutzen, um die Gelbildungszeit T_{Gel} gezielt zu beschleunigen oder zu verlangsamen. Eine Verlangsamung der Bildungsgeschwindigkeit kann beispielsweise dann wichtig sein, wenn -wie oben beschrieben- zunächst einmal ein heiße Zone durchlaufen werden soll, ohne das sich bereits ein Gel bildet. Die Geschwindigkeit der Gelbildung wird nach dem Überschreiten von T_{Gel} naturgemäß auch von der in der Formation herrschenden Temperatur bestimmt. Im Falle von Aluminium hat sich eine Menge von 0,2 bis 3 Gew. % Aluminium(III) bezogen auf die wässrige Formulierung bewährt. Die Menge des Aktivators sollte zumindest so bemessen werden, dass 3 mol Base pro mol Al(III) freigesetzt werden.

In der nachfolgenden Tabelle 1 ist exemplarisch die Zeit bis zur Gelbildung für eine Mischung aus 8 Gew. % AlCl₃ (gerechnet als wasserfreies Produkt, entspricht 1,6 Gew. % Al(III)), 25 Gew. % Harnstoff sowie 67 Gew. % Wasser dargestellt.

**Tabelle 1: Zeit bis zur Gelbildung bei verschiedenen Temperaturen**

| | | | | | |
|---|---|---|---|---|---|
| Temperatur [°C] | 100 | 90 | 80 | 70 | 60 |
| Zeit der Gelbildung [Tage] | 1/4 | 1 | 3 | 6 | 30 |

In der nachfolgenden Tabelle 2 ist die Zeit bis zur Gelbildung für verschiedene Mischungen aus AlCl₃ (gerechnet als wasserfreies Produkt), Harnstoff und Wasser bei 100°C bzw. 100°C dargestellt.

**Tabelle 2: Zeit bis zur Gelbildung ("-" keine Messung)**

| | Eingesetzte Mengen [Gew. %] | Gewichtsverhältnis AlCl₃ / Harnstoff | Zeit bis zur Gelbildung | |
|---|---|---|---|---|
| | | | [h] | |
| | | | 100°C | 110°C |
| AlCl₃ | 4 | 1:4 | 4.0 | - |
| Harnstoff | 16 | | | |
| AlCl₃ | 4 | 1:3 | 4.3 | - |
| Harnstoff | 12 | | | |
| AlCl₃ | 4 | 1:2 | 7.3 | - |
| Harnstoff | 8 | | | |
| AlCl₃ | 4 | 1:1 | 19.0 | - |
| Harnstoff | 4 | | | |
| AlCl₃ | 8 | 1: 3,75 | 5.3 | 2 |
| Harnstoff | 30 | | | |
| AlCl₃ | 2 | 1: 3,75 | - | 8 |
| Harnstoff | 7,5 | | | |
| AlCl₃ | 8 | 1:3 | 5.5 | - |
| Harnstoff | 24 | | | |
| AlCl₃ | 8 | 1:2 | 8.3 | - |
| Harnstoff | 16 | | | |
| AlCl₃ | 8 | 1:1 | 18.0 | - |
| Harnstoff | 8 | | | |
| AlCl₃ | 8 | 1:0,75 | 23.0 | - |
| Harnstoff | 6 | | | |

Man sieht, dass mit abnehmender Menge der Aktivators Harnstoff die Zeit zur Bildung des Gels sowohl für die Reihe 8 Gew. % AlCl₃ als auch die Reihe mit 4 Gew. % AlCl₃ mit abnehmender Menge an Harnstoff immer länger wird. Die Gelbildungszeit lässt sich also über das Verhältnis Aluminiumsalz / Harnstoff gezielt verändern.

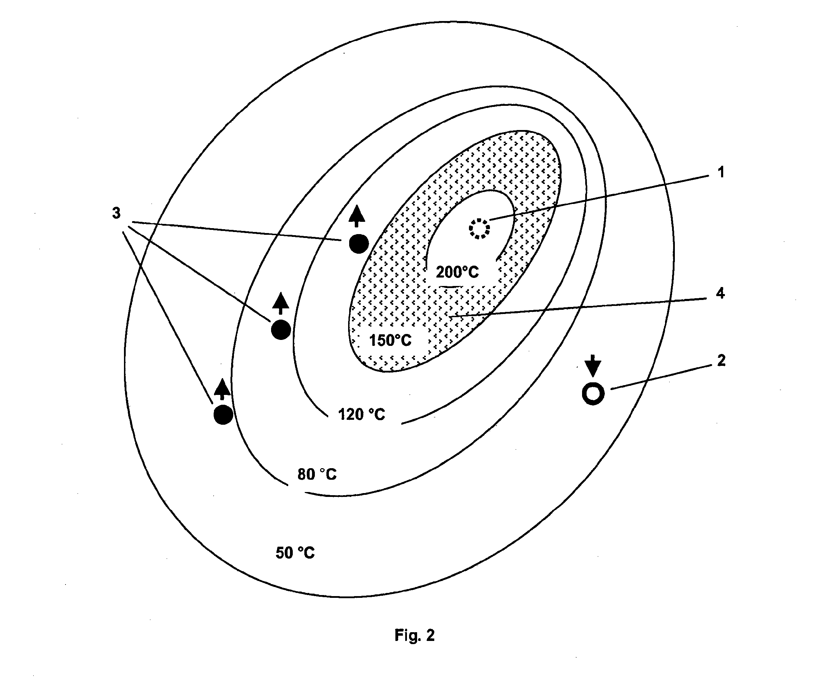

Die genannten Gele auf Basis von Aluminiumsalzen und Harnstoff lassen sich auch bei höheren Temperaturen einsetzen. L. K. Altunina und V. A. Kuvshinov in *Oil & Gas Science and Technology - Rev. IFP, Vol. 63 (2008) (1), Seiten 37 bis 48* präsentieren in Figur 2, Seite 39 Messwerte für eine gelbildende Formulierung als Aluminiumsalzen und Harnstoff bei höheren Temperaturen. Bei 150°C setzt die Gelbildung nach 40 min ein, bei 200°C nach 20 min und bei 250°C nach 10 min ein.

Gelbildende Formulierungen, welche sich besonders für niedrige Lagerstättentemperaturen eignen, können erhalten werden, indem man Harnstoff als Aktivator ganz oder teilweise durch Urotropin (Hexamethylentetramin) als Aktivator ersetzt. Urotropin setzt unter Lagerstättenbedingungen ebenfalls Ammoniak frei. Derartige gelbildende Formulierungen führen auch bei Temperaturen unterhalb von 50°C zur Gelbildung. Typische wässrige Formulierungen können 4 bis 16 Gew. % Harnstoff, 2 bis 8 Gew. % Urotropin sowie 2 bis 4 Gew. % Aluminiumchlorid oder -nitrat (gerechnet als wasserfreies Salz) sowie Wasser bzw. Salzwasser umfassen. Derartige Formulierungen sind beispielsweise von RU 2 066 743 C1 offenbart Die nachfolgende Tabelle 3 stellt einige in RU 2 066 743 C1, Seite 5 bis 7 offenbarte Formulierungen und deren Gelbildung bei verschiedenen Temperaturen zusammen.

US 7,232,101 B2 offenbart gelbildende Formulierungen, welche Aluminiumhydroxychloride als Metallverbindungen und die oben genannten Aktivatoren, beispielsweise Harnstoff umfassen. Hierdurch lässt sich die Gelbildung bei 45°C bis 140°C bei Gelbildungszeiten von 12 bis 96 h erreichen.

Die beschriebenen bevorzugten Formulierungen auf Basis von gelösten Metallverbindungen, insbesondere Aluminiumsalzen und Aktivatoren haben den Vorteil, dass anorganische Gele gebildet werden. Die Gele sind bis zu Temperaturen von 300°C stabil und eignen sich daher ganz besonders für Lagerstätten mit sehr hohen Temperaturen wie Lagerstätten am Ende des Dampfflutens. Weiterhin können die anorganischen Gele bei Bedarf auch wieder sehr leicht aus der Formation entfernt werden, indem man Säure in die Formation injiziert und die Gele löst..

**Tabelle 3: Gelbildung in Abhängigkeit von Temperatur und Zeit**

| Nr. | Komponenten | Gew.-% | Viskosität η vor Temperieren [MPa.s] | Temperatur | | | | | | | |
|---|---|---|---|---|---|---|---|---|---|---|---|
| | | | | 20°C | | 50°C | | 70°C | | 90°C | |
| | | | | Gelbildungszeit t_{Gel} [Tage] | η [MPa.s] | t_{Gel} [Tage] | η [MPa.s] | t_{Gel} [Tage] | η [MPa.s] | t_{Gel} [Tage] | η [MPa.s] |
| 1 | Harnstoff | 16.0 | | | Keine | | Keine | | | | |
| | AlCl₃ | 4.0 | 2.4 | 100 | Gelbildung | 27 | Gelbildung | 4 | 3240 | | |
| 2 | Harnstoff | 16.0 | | | | | | | | | |
| | AlCl₃ | 4.0 | | | | | | | | | |
| | Urotropin | 8.0 | 2.4 | 3 | 6960 | 1 | 4980 | 0.5 | 2500.0 | 0.5 | 2700 |
| 4 | Harnstoff | 16.0 | | | | | | | | | |
| | AlCl₃ | 4.0 | | | | | | | | | |
| | Urotropin | 6.0 | 1.5 | 2 | 1830 | 3 | 4100 | 1 | 2100.0 | 1 | 2800.0 |
| 8 | Harnstoff | 16 | | | | | | | | | |
| | AlCl₃ | 2.0 | | | | | | | | | |
| | Urotropin | 8.0 | 2.0 | 7 | 374.0 | 3 | 3870 | 1 | 2100.0 | 0.5 | 1200.0 |
| 9 | Harnstoff | 16 | | | | | | | | | |
| | AlCl₃ | 4.0 | | | | | | | | | |
| | Urotropin | 4.0 | 1.5 | 7 | 1300.0 | 2 | 3500 | | | | |
| 5 | Harnstoff | 8.0 | | | | | | | | | |
| | AlCl3 | 4.0 | | | | | | | | | |
| | Urotropin | 8.0 | 1.6 | 2 | 3210 | 2 | 6100 | 1 | 2870.0 | 0.5 | 2900.0 |
| 7 | Harnstoff | 8.0 | | | | | | | | | |
| | AlCl₃ | 2.0 | | | | | | | | | |
| | Urotropin | 4.0 | 1.6 | 4 | 600.0 | 4 | 6050 | 1 | 2200.0 | 1 | 2300.0 |
| 6 | Harnstoff | 6.0 | | | | | | | | | |
| | AlCl₃ | 4.0 | | | | | | | | | |
| | Urotropin | 8.0 | 1.5 | 2 | 1830 | 2 | 4100 | 1 | 2500.0 | 1 | 5800.0 |
| 3 | Harnstoff | 4.0 | | | | | | | | | |
| | AlCl₃ | 4.0 | | | | | | | | | |
| | Urotropin | 8.0 | 1.4 | 7 | 2960 | 2 | 3790 | 1 | 2310.0 | 1 | 2300.0 |

Die Erfindung wird anschließend beispielhaft anhand der Figuren näher erläutert.

Verzeichnis der Figuren:
- Fig. 1: Schematische Darstellung eines Abschnittes einer Erdöllagerstätte nach Dampffluten
- Fig. 2: Schematische Darstellung des Abschnittes nach Injizieren einer ersten Portion einer gelbildenden Formulierung (F)
- Fig. 3: Schematische Darstellung des Abschnittes nach Injizieren einer zweiten Portion einer anderen gelbildenden Formulierung (F)
- Fig. 4: Schematische Darstellung des Abschnittes nach Injizieren einer dritten, nochmals veränderten Portion einer gelbildenden Formulierung (F)
- Fig. 5: Schematische Darstellung des Abschnittes nach dem Blockieren hoch permeabler Zonen in den verschiedenen Temperaturzonen durch die gebildeten Gele.
- Fig. 6: Schematische Darstellung der Blockierung von hochpermeablen Zonen einer Formation mit großem Temperaturgradienten gemäß Stand der Technik.
- Fig. 7: Schematische Darstellung der Blockierung von hochpermeablen Zonen einer Formation mit großem Temperaturgradienten nach dem erfindungsgemäßen Verfahren.

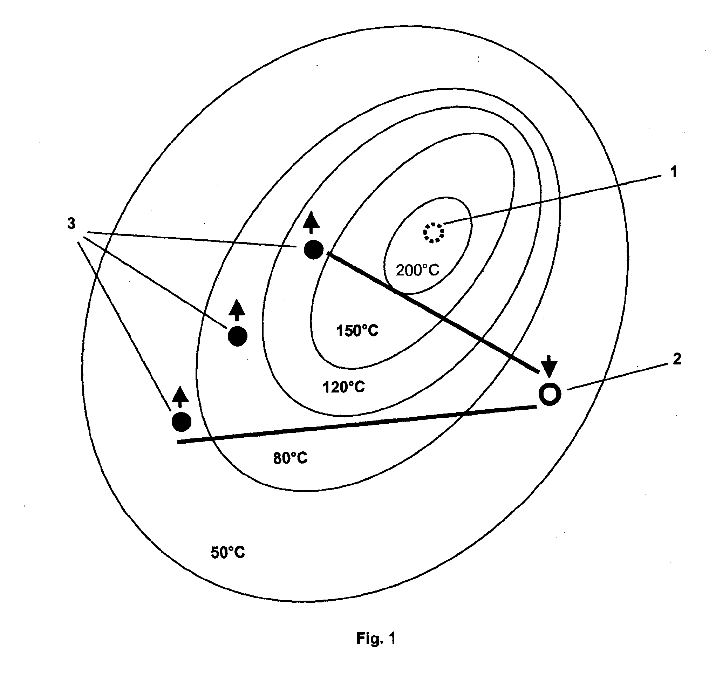

Fig. 1 zeigt schematisch einen Abschnitt einer Erdöllagerstätte nach Ende eines ersten Dampfflutprozesses. Die Lagerstätte ist mit einem Dampfinjektor (1) sowie mehreren Produktionsbohrungen (3) versehen. Durch dem Dampfinjektor (1) wird heißer Dampf in die Formation eingepresst (Dampftemperatur bis zu 320°C) und Öl wird durch die Produktionsbohrungen (3) gefördert. Durch den heißen Dampf erwärmt sich die Lagerstätte ausgehend vom Dampfinjektor (1) stark. Es entstehen Zonen stark unterschiedlicher Temperatur, schematisch sind 5 Zonen mit durchschnittlichen Temperaturen von 200°C, 150°C, 120°C, 800°C und 50°C eingezeichnet. Die höchsten Temperaturen herrschen naturgemäß in unmittelbarer des Dampfinjektors, nehmen aber mit zunehmender Entfernung vom Dampfinjektor ab. Da sich mit zunehmender Dauer des Dampfflutens hochpermeable Bereiche bilden, durch die Dampf bzw. Wasser zu den Produktionsbohrungen durchbrechen kann, wird zunehmend die Produktion verwässert. Die erreichte Temperaturverteilung ändert sich auch nach Ende der Dampfinjektion nur sehr langsam. In der Umgebung von Dampfinjektoren können unter Umständen noch jahrelang gegenüber der ursprünglichen, durchschnittlichen Lagerstättentemperatur deutlich erhöhte Temperaturen herrschen.

Um verbleibende Ölreserven zu mobilisieren, kann eine weitere Injektionsbohrung (2) in die Formation abgeteuft werden. Durch diese Injektionsbohrung kann zunächst einmal mit Wasser sowie ggf. Dampf geflutet werden. Da auf dem Flutweg von (2) zu den Produktionsbohrungen (3) durch die Förderung noch keine hoch permeablen Bereiche gebildet wurden, können hier in der Regel zunächst weitere Ölreserven mobilisiert werden. Das Flutmittel bricht aber in der Regel nach einiger Zeit durch neu gebildete sowie insbesondere durch bereits von der Injektion durch den Dampfinjektor (1) herrührende hoch permeable Zonen durch. Hierdurch steigt die Verwässerung der Produktion wieder an.

Um die Verwässerung der Produktion zu reduzieren und die Entölung zu steigern werden die hoch permeablen Zonen der erdölführenden Formation mittels des erfindungsgemäßen Verfahrens blockiert. Hierzu werden mehrere, verschiedene Portionen der gelbildenden Formulierung (F) durch die Injektionsbohrung (2) in die Formation eingepresst. Die ist schematisch für eine erste, zweite und dritte Portion in den Figuren 2, 3, 4 gezeigt.

Vor dem Einpressen einer ersten Portion wird die Temperaturverteilung im Bereich zwischen der Injektionsbohrung (2) und den Produktionsbohrungen (3) analysiert. Dies geschieht durch direkte Messungen in Kombination mit Simulationsrechnungen. Es werden 3 Teilbereiche unterschiedlicher Temperatur definiert.

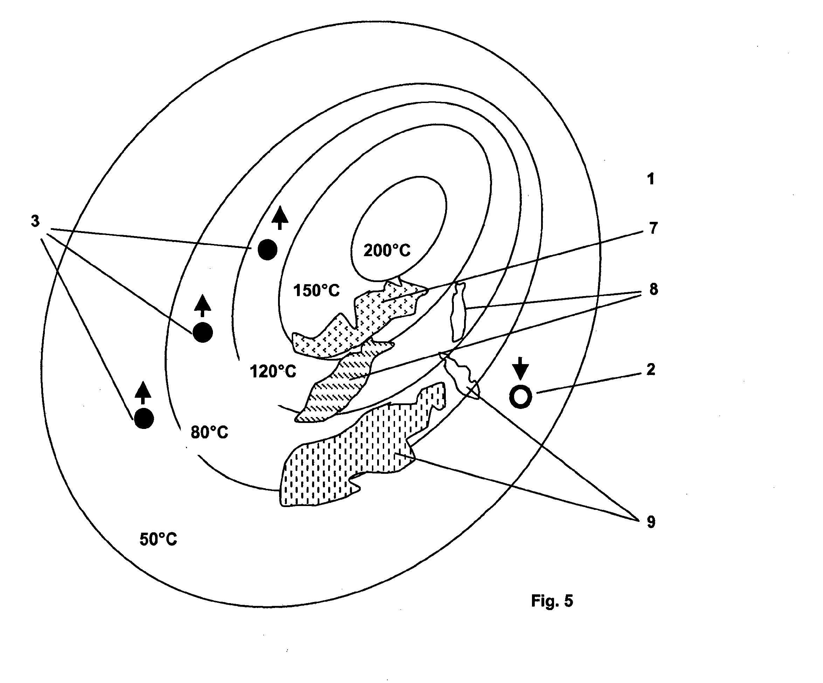

Die Gelbildungstemperatur T_{Gel} der ersten Portion der Formulierung (F) wird entsprechend der Tₘₐₓ im Bereich zwischen der Injektionsbohrung (2) und den Produktionsbohrungen (3) eingestellt; im vorliegenden Falle beträgt T_{Gel} der ersten Portion etwa 150°C, so dass die erste Portion durch die permeablen Bereiche der Zonen mit Temperaturen unterhalb von 150°C bis in die Hochtemperaturzone (4) mit einer Temperatur von 150°C strömt, wo die Gelbildung beginnt. Die ist schematisch in Fig. 2 gezeigt. T_{Gel} kann auch etwas niedriger sein und durch eine längere t_{Gel} kompensiert werden. Das Volumen der ersten Portion wird dem Hohlraumvolumen des ersten Teilbereichs angepasst. Auch in der Hochtemperaturzone fließt die Formulierung naturgemäß in die Zonen mit hoher Permeabilität ein. Hierdurch werden die hoch permeablen Zonen in der Hochtemperaturzone (4) zumindest teilweise geschlossen. Figur 5 zeigt schematisch einen Bereich (7) in der Hochtemperaturzone (4), der nun durch ein Gel ganz oder zumindest teilweise verschlossen ist.

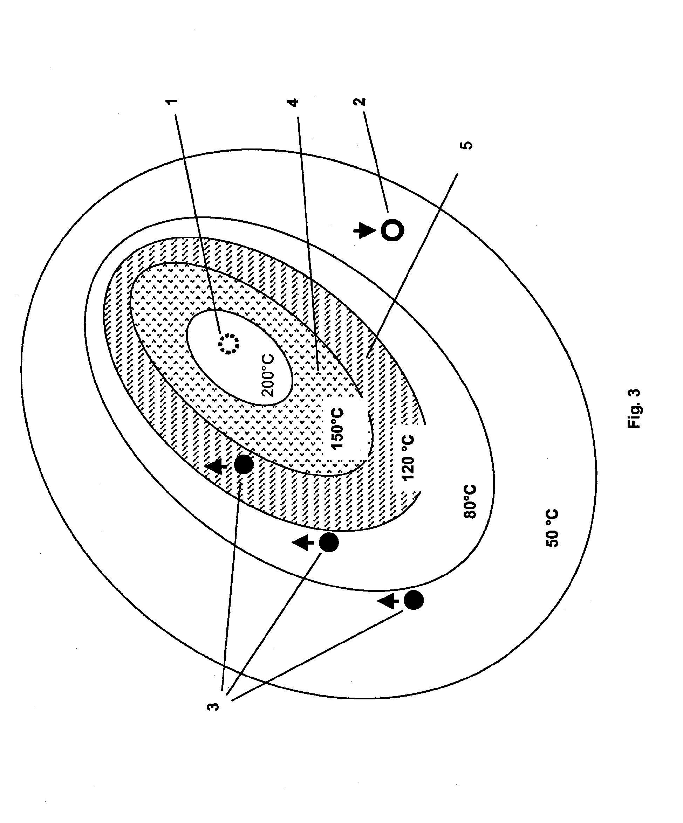

Anschließend wird eine zweite Portion der Formulierung (F) angesetzt, deren Gelbildungstemperatur T_{Gel} der Temperatur in der Zone nächst niedriger Temperatur (5) entspricht; im vorliegenden Falle ist T_{Gel} der zweiten Portion etwa 120°C. Auch dieses Gel fließt zunächst durch die kälteren Zone und bildet in den hoch permeablen Bereichen der Mitteltemperaturzone (5) Gele. Dies ist schematisch in Fig. 3 gezeigt. Figur 5 zeigt weiterhin schematisch zwei Bereiche (8) in der Mitteltemperaturzone (5), die nun durch ein Gel ganz oder zumindest teilweise verschlossen sind.

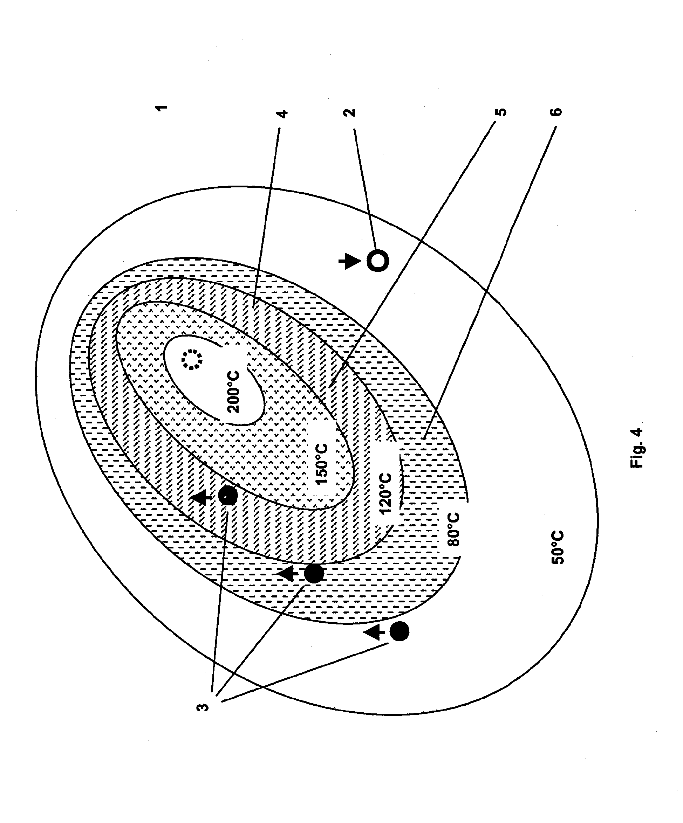

In analoger Art und Weise wird anschließend eine dritte Portion der Formulierung (F) angesetzt, deren Gelbildungstemperatur T_{Gel} der Temperatur in der Tieftemperaturzone (6) entspricht; im vorliegenden Falle ist T_{Gel} der dritten Portion etwa 80°C. Dies ist schematisch in Fig. 4 gezeigt. Figur 5 zeigt weiterhin schematisch zwei Bereiche (9) in der Tieftemperaturzone (6), die nun durch ein Gel ganz oder zumindest teilweise verschlossen sind.

Fig. 5 zeigt, dass nun die hoch permeablen Bereiche im Bereich zwischen der Injektionsbohrung (2) und den Produktionsbohrungen (3) verschlossen sind, und zwar in mehreren Temperaturzonen.

Die Erdölförderung kann nun beispielsweise durch das Einpressen eines Flutmediums, insbesondere von Dampf und/oder Wasser durch die Injektionsbohrung (2) und/oder (1) fortgesetzt werden. Der Dampf kann nun die blockierten Zonen (7), (8) und (9) nicht durchströmen und sondern wird auf Strömungswege um die blockierten Zonen herum oder zwischen den blockierten Zonen hindurch gezwungen. Diese Zonen sind bislang noch nicht entölt und können nun durch das Wasser und/oder den Dampf entölt werden.

Das erfindungsgemäße Verfahren weist den Vorteil auf, dass bei Erdölformationen, welche starke Temperaturgradienten aufweisen, insbesondere Formationen nach einem Dampfflutvorgang, durch das Injizieren mehrerer Portionen einer gelbildenden Formulierung mit unterschiedlicher Gelbildungstemperatur ein besonders vollständiger Verschluss hoch poröser Bereiche erreicht wird, weil hoch poröse Bereiche in unterschiedlichen Temperaturzonen blockiert werden können. Dieser Effekt lässt sich besonders gut an Fig. 5 erkennen. Nach dem Blockieren der porösen Zonen in den Temperaturbereichen mit einer Durchschnitttemperatur von 150°C, 120°C und 80°C wird ein durch die Injektionsbohrung (2) oder auch (1) injiziertes Flutmedien effizient in noch nicht entölte Bereiche geleitet.

Hätte man nur mit einer einzigen Portion der Formulierung (F) geflutet, beispielsweise der mit einer T_{Gel} von 140°C, dann wäre nur die Zone (7) blockiert worden, während die hoch permeablen Bereiche in den anderen Temperaturzonen nicht verschlossen worden wären. Ein durch (2) injiziertes Flutmedium würde in diesem Falle durch die hoch permeablen, aber nicht blockierten Zonen (9) sehr schnell in Richtung der Produktionsbohrungen (3) ohne die umliegenden, nicht entölten Zonen zu durchfließen.

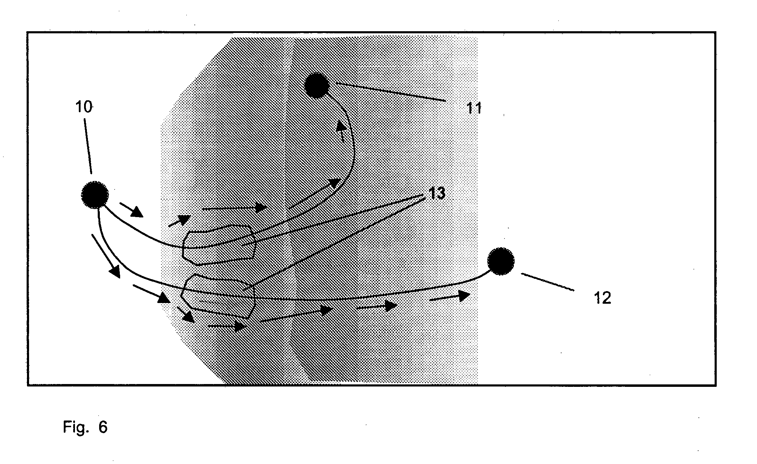

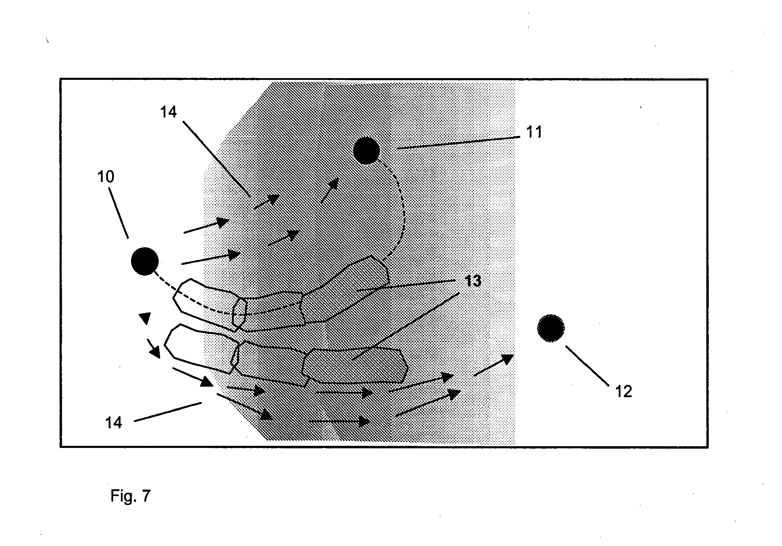

Ein Vergleich des erfindungsgemäßen Verfahrens mit einem Verfahren gemäß Stand der Technik ist beispielhaft in den Abbildungen 6 und 7 gezeigt. Die Abbildungen zeigen jeweils eine Injektionsbohrung 10 sowie jeweils zwei Produktionsbohrungen 11 und 12. Die Temperatur nimmt von der Injektionsbohrung zu den Produktionsbohrungen hin zu (grau schattiert), wobei die Produktionsbohrung 11 in einer sehr heißen Zone und die Produktionsbohrung 12 schon wieder in einer kühleren Zone liegt. Die Temperatur steigt also von 10 zu 11 hin beständig an, während sie von 10 zu 12 hin ein Maximum durchläuft. Zwischen der Injektionsbohrung und den Produktionsbohrungen haben sich bereits hochpermerable Zonen gebildet, auf denen das Flutmedium bevorzugt strömt.

Bei dem Verfahren gemäß Stand der Technik (Fig. 6) wird in die hochpermeable Zone eine Portion eines Thermogels injiziert, so dass sich bei Erreichen der heißeren Zonen eine Gelbank 13 bildet, durch die der Fließweg für das Flutmedium blockiert wird. Das Flutmedium fließt nun zwar um die gebildeten Gelbänke herum, strömt danach aber sehr schnell wieder in die bereits existierenden und unverschlossenen hochpermeablen Zonen ein und strömt durch diese zu den Produktionsbohrungen 11 und 12. Die Verwässerung der Produktion nimmt somit nach einer gewissen Zeit schnell wieder zu.

Beim dem Beispiel des erfindungsgemäßen Verfahrens (Fig. 7) wird zunächst eine Portion mit einer hohen T_{Gel} injiziert, welche beim Erreichen der heißesten Zone geliert. Anschließend werden noch zwei weitere Portionen mit jeweils niedrigerer T_{Gel} injiziert wodurch sich zwei weitere Gelbänke jeweils näher zur Produktionsbohrung hin bilden. Durch die Verwendung von 3 Portionen der gelbildenden Formulierung mit jeweils absteigender Gelbildungstemperatur werden die bevorzugten Fließwege auf einer viel größeren Länge blockiert, als das beim Verfahren gemäß Stand der Technik der Fall ist. Das Flutmedium kann diese blockierten Zonen nicht mehr so einfach umfließen wie in Figur 6 und Erdöl wird nun über völlig neue Wege (14) in Richtung der Produktionsbohrungen gedrückt. Die Verwässerung der Produktion wird viel stärker und nachhaltiger reduziert beim Injizieren nur einer einzigen Portion einer gelbildenden Formulierung.

## Patentansprüche

1. Verfahren zur Förderung von Erdöl aus unterirdischen Erdöllagerstätten, in welche mindestens eine Produktionsbohrung und mindestens eine Injektionsbohrung abgeteuft sind, umfassend mindestens die folgenden Verfahrensschritte:
(1) Einpressen von wässrigen, gelbildenden Formulierungen (F) durch eine Injektionsbohrung in die Erdöllagerstätte, wobei die Formulierungen (F) Wasser sowie eine oder mehrere chemische Komponenten enthalten, welche nach dem Einpressen in die Lagerstätte unter dem Einfluss der Lagerstättentemperatur Gele bilden, gefolgt von
(2) Fördern von Öl durch mindestens eine Produktionsbohrung,
**dadurch gekennzeichnet, dass**
• die Lagerstätte im Bereich zwischen der Injektionsbohrung und der Produktionsbohrung eine Temperaturverteilung mit einer minimalen Temperatur Tₘᵢₙ ≥ 20°C und einer maximalen Temperatur Tₘₐₓ ≤ 320°C aufweist, wobei die Temperaturdifferenz Tₘₐₓ- Tₘᵢₙ mindestens 20°C beträgt,
• man in einem Verfahrensschritt (1) vorgelagerten Schritt die Temperaturverteilung im Bereich zwischen der Injektionsbohrung und der Produktionsbohrung analysiert, und
• man in Verfahrensschritt (1) mindestens zwei verschiedene Portionen wässriger, gelbildender Formulierungen (F) nacheinander in die Formation injiziert, wobei es sich bei den Formulierungen (F) um saure, wässrige Formulierungen mit einem pH-Wert ≤ 5 handelt, welche mindestens
- Wasser,
- eine darin gelöste Aluminiumverbindung, die beim Versetzen mit Basen Gele bilden kann, ausgewählt aus der Gruppe von Aluminium(III)salzen und teilweise hydrolysierten Aluminiumsalzen, sowie
- einen wasserlöslichen Aktivator umfassen, welcher bei einer Temperatur T ≥ T_{Gel} eine Erhöhung des pH-Wertes der wässrigen Lösung bewirkt, ausgewählt aus der Gruppe von Harnstoff und/oder Hexamethylentetramin,
wobei jede der Portionen zur Gelbildung bei einer Temperatur oder einem Temperaturbereich innerhalb der Spanne von Tₘᵢₙ bis Tₘₐₓ befähigt ist, und wobei sich die Formulierungen im Hinblick auf die Art der enthaltenen chemischen Komponenten und/oder deren jeweiliger Konzentration unterscheiden, mit der Maßgabe, dass die chemischen Komponenten der Formulierungen und/oder deren Konzentration so gewählt werden, dass sich die Gelbildungstemperatur (T_{Gel}) und/oder die Gelbildungszeit (t_{Gel}) der zweiten und optional jeder weiteren injizierten Portion von der der zuvor injizierten Portion unterscheidet.

2. Verfahren gemäß Anspruch 1, **dadurch gekennzeichnet, dass** Tₘₐₓ ≤ 250°C ist.

3. Verfahren gemäß Anspruch 1 oder 2, **dadurch gekennzeichnet, dass** die Gelbildungstemperatur T_{Gel} der eingesetzten Formulierungen 20°C bis 150°C beträgt.

4. Verfahren gemäß Anspruch 1, **dadurch gekennzeichnet, dass** T_{Gel} der Portionen von Portion zu Portion verringert wird.

5. Verfahren gemäß Anspruch 4, **dadurch gekennzeichnet, dass** die Änderung von T_{Gel} stufenweise erfolgt.

6. Verfahren gemäß Anspruch 4, **dadurch gekennzeichnet, dass** die Änderung von T_{Gel} kontinuierlich erfolgt.

7. Verfahren gemäß einem der Ansprüche 1 bis 6, **dadurch gekennzeichnet, dass** die Viskosität der einzusetzenden, gelbildenden Formulierungen (F) -vor dem Injizieren in die Formation- von Portion zu Portion zunimmt.

8. Verfahren gemäß einem der Ansprüche 1 bis 7, **dadurch gekennzeichnet, dass** man auf Basis der Analyse der Temperaturverteilung den Bereich zwischen der Injektionsbohrung und der Produktionsbohrung in mindestens zwei Teilbereiche einteilt und man eine der Anzahl der Teilbereiche entsprechende Anzahl von Portionen einpresset, wobei man das Verhältnis der Volumina der einzupressenden Portionen entsprechend dem Verhältnis der Hohlraumvolumina der besagten Teilbereiche wählt.

9. Verfahren gemäß einem der Ansprüche 1 bis 8, **dadurch gekennzeichnet, dass** man die einzelnen Portionen unmittelbar nacheinander injiziert.

10. Verfahren gemäß einem der Ansprüche 1 bis 8, **dadurch gekennzeichnet, dass** das Einpressen der einzelnen Portionen durch eine Pause unterbrochen wird, in der keine Formulierung (F) eingepresst wird.

11. Verfahren gemäß Anspruch 10, **dadurch gekennzeichnet, dass** während der Unterbrechung Wasser und/oder Dampf injiziert wird.

12. Verfahren gemäß einem der Ansprüche 1 bis 11, **dadurch gekennzeichnet, dass** Verfahrensschritt (2) durch Einpressen eines Flutmediums durch eine Injektionsbohrung in die Erdöllagerstätte und Entnehmen von Rohöl durch mindestens eine Produktionsbohrung erfolgt.

13. Verfahren gemäß einem der Ansprüche 1 bis 12, **dadurch gekennzeichnet, dass** man das Verfahren im Anschluss an Dampffluten der Lagerstätte vornimmt.

14. Verfahren gemäß einem der Ansprüche 1 bis 13, **dadurch gekennzeichnet, dass** es sich bei der Aluminiumverbindung um gelöste Aluminium(III)verbindungen ausgewählt aus der Gruppe von Aluminiumchlorid, Aluminiumnitrat, Aluminiumsulfat, Aluminiumacetat und Aluminiumacetylacetonat handelt.

15. Verfahren gemäß einem der Ansprüche 1 bis 14, **dadurch gekennzeichnet, dass** es sich bei der Aluminiumverbindung um Aluminium(III)chlorid handelt.

## Claims

1. A process for the production of mineral oil from underground mineral oil deposits in which at least one production well and at least one injection well have been sunk, comprising at least the following process steps:
(1) forcing aqueous, gel-forming formulations (F) through an injection well into the mineral oil deposit, the formulations (F) comprising water and one or more chemical components, which, after being forced into the deposit, form gels under the influence of the deposit temperature, followed by
(2) production of oil through at least one production well,
wherein
• the deposit in the region between the injection well and the production well has a temperature distribution with a minimum temperature Tₘᵢₙ of ≥ 20°C and a maximum temperature Tₘₐₓ of ≤ 320°C, the temperature difference Tₘₐₓ - Tₘᵢₙ being at least 20°C,
• in a step upstream of process step (1), the temperature distribution in the region between the injection well and the production well is analyzed, and
• in process step (1), at least two different portions of aqueous, gel-forming formulations (F) are injected successively into the formation, the formulations (F) being acidic aqueous formulations with a pH ≤ 5, which comprise at least
- water,
- an aluminum compound which is dissolved therein and can form gels on addition of bases, selected from the group of aluminum(III) salts and partly hydrolyzed aluminum salts and
- a water-soluble activator which produces an increase in the pH of the aqueous solution at a temperature T ≥ T_{Gel}, selected from the group of urea and/or hexamethylenetetramine,
each of the portions being capable of gel formation at a temperature or in a temperature range within a span of from Tₘᵢₙ to Tₘₐₓ, and the formulations differing with respect to the type of chemical components comprised and/or their respective concentration, with the proviso that the chemical components of the formulations and/or their concentration are chosen so that the gel formation temperature (T_{Gel}) and/or the gel formation time (t_{Gel}) of the second and optionally any further injected portion differs from that of the previously injected portion.

2. The process according to claim 1, wherein T_{maX} < 250°C.

3. The process according to claim 1 or 2, wherein the gel formation temperature T_{Gel} of the formulations used is 20°C to 150°C.

4. The process according to claim 1, wherein T_{Gel} of the portions is reduced from portion to portion.

5. The process according to claim 4, wherein the change in T_{Gel} takes place stepwise.

6. The process according to claim 4, wherein the change in T_{Gel} takes place continuously.

7. The process according to any of claims 1 to 6, wherein the viscosity of the gel-forming formulations (F) to be used increases - before injection into the formation - from portion to portion.

8. The process according to any of claims 1 to 7, wherein, on the basis of the analysis of the temperature distribution, the region between the injection well and the production well is divided into at least two partial regions, and a number of portions corresponding to the number of partial regions is forced in, the ratio of the volumes of the portions to be forced in being chosen according to the ratio of the cavity volumes of said partial regions.

9. The process according to any of claims 1 to 8, wherein the individual portions are injected directly in succession.

10. The process according to any of claims 1 to 8, wherein the forcing in of the individual portions is interrupted by a pause in which no formulation (F) is forced in.

11. The process according to claim 10, wherein water and/or steam is injected during the interruption.

12. The process according to any of claims 1 to 11, wherein process step (2) is effected by forcing a flooding medium through an injection well into the mineral oil deposit and removing crude oil through at least one production well.

13. The process according to any of claims 1 to 12, wherein the process is carried out after the steam flooding of the deposit.

14. The process according to any of claims 1 to 13, wherein the aluminum compound us a dissolved aluminum(III) compound selected from the group of aluminum chloride, aluminum nitrate, aluminum sulfate, aluminum acetate and aluminum acetylacetonate.

15. The process according to any of claims 1 to 14, wherein the aluminum compound is aluminum(III) chloride.

## Revendications

1. Procédé pour l'extraction de pétrole à partir de gisements pétrolifères souterrains, dans lesquels sont forés au moins un puits de production et au moins un puits d'injection, comprenant au moins les étapes suivantes de processus :
(1) injection de compositions aqueuses (F) formant un gel, par un puits d'injection dans le gisement pétrolifère, les compositions (F) contenant de l'eau ainsi qu'un ou plusieurs composants chimiques qui après l'injection dans le gisement forment des gels sous l'effet de la température du gisement, suivie de
(2) extraction du pétrole par au moins un puits de production,
**caractérisé en ce que**
• le gisement dans la zone entre le puits d'injection et le puits de production présente une répartition de la température avec une température minimale Tmin ≥ 20 °C et une température maximale Tₘₐₓ ≤ 320 °C, la différence de température Tₘₐₓ - Tₘᵢₙ étant d'au moins 20 °C,
• dans une étape précédant l'étape (1) du procédé on analyse la répartition de la température dans la zone entre le puits d'injection et le puits de production, et
• dans l'étape (1) du procédé on injecte successivement dans la formation au moins deux différentes portions de compositions aqueuses (F) formant des gels, les compositions (F) consistant en des compositions aqueuses acides ayant un pH ≤ 5, qui comprennent au moins
- de l'eau,
- un composé d'aluminium dissous dans celle-ci, qui lors de l'addition de bases peut former des gels, choisi dans le groupe des sels d'aluminium(III) et des sels d'aluminium partiellement hydrolysés, ainsi
- qu'un activateur hydrosoluble qui provoque à une température T ≥ T_{gel} une élévation du pH de la solution aqueuse, choisi dans le groupe constitué par l'urée et/ou l'hexaméthylènetétramine,
chacune des portions étant apte à la gélification à une température ou dans une plage de température dans l'intervalle de Tₘᵢₙ à T_{max,} et les compositions différant en ce qui concerne la nature des composants chimiques contenus et/ou leur concentration respective, étant entendu qu'on choisit les composants chimiques des compositions et/ou leur concentration de manière que la température de gélification (T_{gel}) et/ou le temps de gélification (t_{gel}) de la deuxième et en option de chaque autre portion injectée diffère(nt) de celle/celui de la portion injectée précédemment.

2. Procédé selon la revendication 1, **caractérisé en ce que** Tₘₐₓ est ≤ 250 0 °C.

3. Procédé selon la revendication 1 ou 2, **caractérisé en ce que** la température de gélification T_{gel} des compositions utilisées vaut de 20 °C à 150 °C.

4. Procédé selon la revendication 1, **caractérisé en ce que** T_{gel} des portions est abaissée d'une portion à l'autre.

5. Procédé selon la revendication 4, **caractérisé en ce que** la modification de T_{gel} s'effectue graduellement.

6. Procédé selon la revendication 4, **caractérisé en ce que** la modification de T_{gel} s'effectue en continu.

7. Procédé selon l'une quelconque des revendications 1 à 6, **caractérisé en ce que** la viscosité des compositions (F) formant des gels, à utiliser, augmente d'une portion à l'autre - avant l'injection dans la formation.

8. Procédé selon l'une quelconque des revendications 1 à 7, **caractérisé en ce que** sur la base de l'analyse de la répartition de la température on divise la zone entre le puits d'injection et le puits de production en au moins deux zones partielles et on injecte un nombre de portions correspondant au nombre des zones partielles, en choisissant le rapport des volumes des portions à injecter en fonction du rapport des volumes des espaces vides desdites zones partielles.

9. Procédé selon l'une quelconque des revendications 1 à 8, **caractérisé en ce qu'**on injecte les portions individuelles immédiatement les unes après les autres.

10. Procédé selon l'une quelconque des revendications 1 à 8, **caractérisé en ce qu'**on interrompt l'injection des portions individuelles par une pause, dans laquelle on n'injecte aucune composition (F).

11. Procédé selon la revendication 10, **caractérisé en ce que** pendant l'interruption on injecte de l'eau et/ou de la vapeur.

12. Procédé selon l'une quelconque des revendications 1 à 11, **caractérisé en ce que** l'étape (2) du procédé s'effectue par injection d'un milieu d'injection par un puits d'injection dans le gisement pétrolifère et extraction du pétrole par au moins un puits de production.

13. Procédé selon l'une quelconque des revendications 1 à 12, **caractérisé en ce qu'**on effectue le procédé à la suite d'injection de vapeur dans le gisement.

14. Procédé selon l'une quelconque des revendications 1 à 13, **caractérisé en ce que** pour ce qui concerne le composé d'aluminium il s'agit de composés d'aluminium(III) dissous choisis dans le groupe constitué par le chlorure d'aluminium, le nitrate d'aluminium, le sulfate d'aluminium, l'acétate d'aluminium et l'acétylacétonate d'aluminium.

15. Procédé selon l'une quelconque des revendications 1 à 14, caractérisé en ce le composé d'aluminium consiste en chlorure d'aluminium(III).
